# EUROPEAN PATENT APPLICATION

(11) **EP 2 393 081 A2**
(43) Date of publication of application: **07.12.2011**
(21) Application number: 11003739.7
(22) Date of filing: 06.05.2011
(51) Int. Cl.: G09G 5/14, G06F 3/033

(54) **Method for operating an image display apparatus and an image display apparatus**

(30) Priority: 06.05.2010 KR 20100042637
(71) Applicant: LG ELECTRONICS INC., Yeongdeungpo-gu Seoul 150-721 (KR)
(72) Inventor: Lee, Hyungnam, Seoul 137-724 (KR); Kim, Uniyoung, Seoul 137-724 (KR); Koo, Sangjun, Seoul 137-724 (KR); Jang, Saehun, Seoul 137-724 (KR); Hong, Sayoon, Seoul 137-724 (KR)
(74) Representative: Beyer, Andreas

(57) **Abstract**

A method may be provided for operating an image display apparatus. Content may be displayed on a display, and a size of a first region in which the content is displayed may change. A menu may be displayed in a second region of the display at a side of the first region. An area of the first region in which the content is displayed may be greater than an area of the second region in which the menu is displayed.

## Description

This application claims priority from Korean Application No. 10-2010-0042637, filed May 6, 2010, the subject matter of which is incorporated herein by reference.

### BACKGROUND

### 1. Field

Embodiments may relate to an image display apparatus.

### 2. Background

An image display apparatus may display images to a user. The image display apparatus may display a broadcast program selected by the user on a display from among broadcast programs transmitted from broadcasting stations. Broadcasting is transitioning from analog to digital broadcasting.

As digital audio and video signals are transmitted, digital broadcasting may offer advantages over analog broadcasting, such as robustness against noise, less data loss, ease of error correction and/or an ability to provide clear high-definition images. Digital broadcasting may also allow interactive viewer services, unlike analog broadcasting.

As functions of the image display apparatus and content therefore continue to increase, research into optimized screen arrangement, screen change methods, content utilization methods, etc. may be conducted to efficiently utilize various functions of the image display apparatus and the content.

### BRIEF DESCRIPTION OF THE DRAWINGS

Arrangements and embodiments may be described in detail with reference to the following drawings in which like reference numerals refer to like elements and wherein:
FIG. 1 a block diagram showing an internal configuration of an image display apparatus according to an embodiment;
FIG. 2 is a block diagram showing an internal configuration of a channel browsing processor of FIG. 1;
FIGs. 3A and 3B are diagrams to illustrate an example of a remote control device of FIG. 1;
FIG. 4 is a block diagram showing a configuration of a portion of a user input interface of FIG. 1 and a pointing device of FIG. 3;
FIG. 5 is a flowchart of a method for operating an image display apparatus according to an embodiment; and
FIGs. 6 to 14 are display screens of an image display apparatus to illustrate a method for operating an image display apparatus according to an embodiment.

### DETAILED DESCRIPTION

As used herein, the terms "module" and "unit" may be attached to describe names of components to help understanding of components and thus they should not be considered as having specific meanings or roles. Accordingly, the terms "module" and "unit" may be used interchangeably.

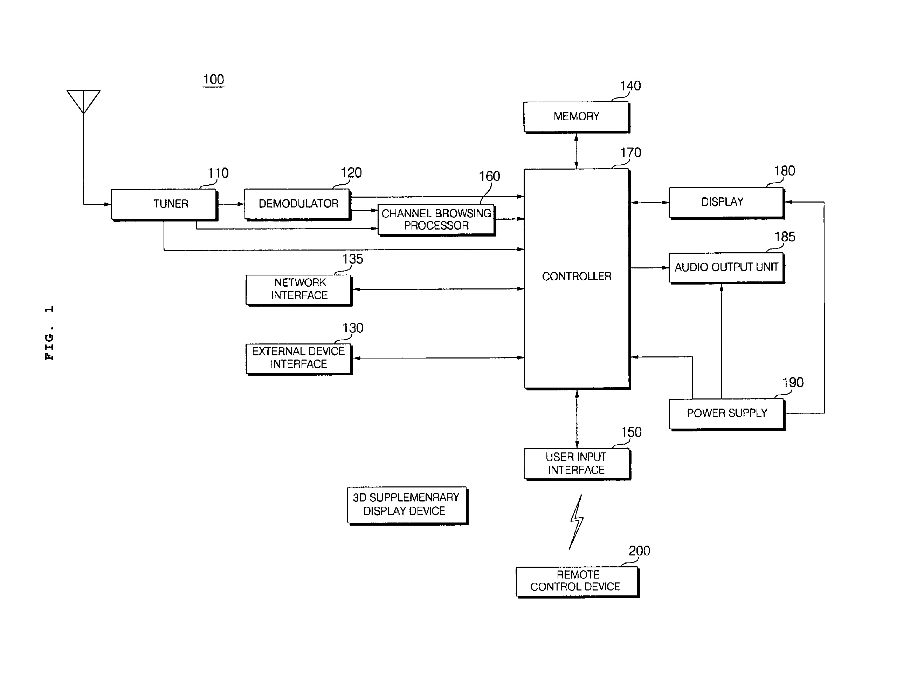

FIG. 1 a diagram showing an internal configuration of an image display apparatus according to an embodiment. Other embodiments and configurations may also be provided.

As shown in FIG. 1, an image display apparatus 100 may include a tuner 110, a demodulator 120, an external device interface 130, a network interface 135, a memory 140, a user input interface 150, a controller 170, a display 180, an audio output unit 185, and a power supply 190. A channel browsing processor 160 may also be provided.

The tuner 110 may tune to a Radio Frequency (RF) broadcast signal corresponding to a channel selected by a user from among RF broadcast signals received through an antenna or RF broadcast signals corresponding to all channels previously stored in the image display apparatus. The selected RF broadcast may be converted into an Intermediate Frequency (IF) signal and/or a baseband Audio/Video (AV) signal.

For example, the selected RF broadcast signal may be converted into a digital IF signal DIF when it is a digital broadcast signal, and may be converted into an analog baseband AV signal (Composite Video Banking Sync/Sound Intermediate Frequency (CVBS/SIF)) when it is an analog broadcast signal. For example, the tuner 110 may process a digital broadcast signal or an analog broadcast signal. The analog baseband AV signal output from the tuner 110 may be directly input to the controller 170.

Additionally, the tuner 110 may be capable of receiving RF broadcast signals from an Advanced Television Systems Committee (ATSC) single-carrier system and/or from a Digital Video Broadcasting (DVB) multi-carrier system.

The tuner 110 may sequentially select a number of RF broadcast signals corresponding to all broadcast channels previously stored in the image display apparatus by a channel storage function from a plurality of RF signals received through the antenna and may convert the selected RF broadcast signals into IF signals or baseband A/V signals.

The demodulator 120 may receive the digital IF signal DIF from the tuner 110 and demodulate the digital IF signal DIF.

For example, if the digital IF signal DIF output from the tuner 110 is an ATSC signal, the demodulator 120 may perform 8-Vestigal SideBand (VSB) demodulation. The demodulator 120 may also perform channel decoding. For channel decoding, the demodulator 120 may include a Trellis decoder, a de-interleaver and a Reed-Solomon decoder so as to perform Trellis decoding, de-interleaving and Reed-Solomon decoding.

For example, if the digital IF signal DIF is a DVB signal, the demodulator 120 may perform Coded Orthogonal Frequency Division Multiple Access (COFDMA) demodulation. The demodulator 120 may also perform channel decoding. For channel decoding, the demodulator 120 may include a convolution decoder, a de-interleaver, and a Reed-Solomon decoder so as to perform convolution decoding, de-interleaving and Reed-Solomon decoding.

The demodulator 120 may perform demodulation and channel decoding, thereby obtaining a stream signal TS. The stream signal TS may be a signal in which a video signal, an audio signal and a data signal are multiplexed. For example, the stream signal TS may be an MPEG-2 Transport Stream (TS) in which an MPEG-2 video signal and a Dolby AC-3 audio signal are multiplexed. An MPEG-2 TS may include a 4-byte header and a 184-byte payload.

In order to properly handle not only ATSC signals but also DVB signals, the demodulator 120 may include an ATSC demodulator and a DVB demodulator.

The stream signal output from the demodulator 120 may be input to the controller 170 and may thus be subjected to demultiplexing and A/V signal processing. The processed video and audio signals may be output to the display 180 and the audio output unit 185, respectively.

The external device interface 130 may serve as an interface between an external device and the image display apparatus 100. For interfacing, the external device interface 130 may include an A/V Input/Output (I/O) unit and/or a wireless communication module.

The external device interface 130 may be connected to an external device such as a Digital Versatile Disk (DVD) player, a Blu-ray player, a game console, a camera, a camcorder, a computer (e.g., a laptop computer), and/or another appropriate type of external device, wirelessly or by wire. The external device interface 130 may receive video, audio, and/or data signals from the external device and may transmit the received input signals to the controller 170. Additionally, the external device interface 130 may output video, audio, and data signals processed by the controller 170 to the external device. In order to receive or transmit audio, video and data signals from or to the external device, the external device interface 130 may include the A/V I/O unit and/or the wireless communication module.

The A/V I/O unit may include a Universal Serial Bus (USB) port, a Composite Video Banking Sync (CVBS) port, a Component port, a Super-video (S-video) (analog) port, a Digital Visual Interface (DVI) port, a High-Definition Multimedia Interface (HDMI) port, a Red-Green-Blue (RGB) port, a D-sub port, and/or another appropriate type of I/O port in order to input the video and audio signals of the external device to the image display apparatus 100.

The wireless communication module may perform short-range wireless communication with other electronic devices. The image display apparatus 100 may be connected to the other electronic apparatuses over a network according to communication protocols such as Bluetooth, Radio-Frequency IDentification (RFID), Infrared Data Association (IrDA), Ultra WideBand (UWB), ZigBee, and/or another appropriate type of communication protocol based on desired characteristics.

The external device interface 130 may be connected to various set-top boxes through at least one of the above-described ports and may thus receive data from or transmit data to the various set-top boxes.

The external device interface 130 may transmit or receive data to or from a 3D supplementary display device 195.

The network interface 135 may serve as an interface between the image display apparatus 100 and a wired/wireless network such as the Internet. For connection to wireless networks, Wireless Local Area Network (WLAN) (i.e., Wi-Fi), Wireless Broadband (WiBro), World Interoperability for Microwave Access (WiMax), High Speed Downlink Packet Access (HSDPA) and/or the like may be used.

The network interface 135 may receive content or data provided by an Internet or content provider or a network operator over a network. That is, content such as movies, advertisements, games, VOD files, broadcast signals, information associated therewith, and/or the like may be received from the content provider over the network. Also, the network interface 135 may receive update information about firmware and update files of the firmware from the network operator. The network interface 135 may transmit data over the Internet or content provider or the network operator.

The content may be received through the network interface 135 as well as the tuner 110, the external device interface 130, the memory 140 and/or another appropriate data I/O interface. Moreover, the content may include broadcast programs, multimedia content, and/or the like as well as data associated therewith such as icons, thumbnails, EPG, and/or the like. As used herein, content may also include control buttons or icons configured to execute prescribed operations on the image display apparatus 100.

The network interface 135 may be connected to an Internet Protocol (IP) TV, for example. The network interface 135 may receive and transmit video, audio or data signals processed by an IPTV set-top box to the controller 170, and may transmit the signals processed by the controller 170 to the IPTV set-top box, for interactive communication.

The IPTV may be an ADSL-TV, VDSL-TV, FTTH-TV, etc. according to the type of a transmission network and may include TV over DSL, Video over DSL, TV over IP (TVIP), Broadband TV (BTV), etc. The IPTV may be an Internet TV and/or a full-browsing TV.

The memory 140 may store various programs necessary for the controller 170 to process and control signals, and may also store processed video, audio and data signals.

The memory 140 may temporarily store a video, audio and/or data signal received from the external device interface 130. The memory 140 may store information about predetermined broadcast channels using the channel storage function.

The memory 140 may include, for example, at least one of a flash memory-type storage medium, a hard disk-type storage medium, a multimedia card micro-type storage medium, a card-type memory (e.g. a Secure Digital (SD) or extreme Digital (XD) memory), a Random Access Memory (RAM), a Read-Only Memory (ROM) such as an Electrically Erasable and Programmable Read Only Memory (EEPROM), and/or another appropriate type of storage device. The image display apparatus 100 may reproduce content stored in the memory 140 (e.g. video files, still image files, music files, text files, application files, icons, thumbnails, control buttons, and/or the like) to the user.

While the memory 140 as shown in FIG. 1 is configured separately from the controller 170, embodiments are not limited thereto, and the memory 140 may be incorporated into the controller 170.

The user input interface 150 may transmit a signal input by the user to the controller 170 or transmit a signal received from the controller 170 to the user.

For example, the user input interface 150 may receive various user input signals such as a power-on/off signal, a channel selection signal, and/or a screen setting signal from a remote control device 200 (or remote controller) or may transmit a signal received from the controller 170 to the remote control device 200 based on various communication schemes (e.g. RF communication and IR communication).

For example, the user input interface 150 may provide the controller 170 with user input signals received from local keys, such as inputs of a power key, a channel key, and a volume key, and setting values.

The user input interface 150 may transmit a user input signal received from a sensor unit for sensing a user gesture to the controller 170 or transmit a signal received from the controller 170 to the sensor unit. The sensor unit may include a touch sensor, a voice sensor, a position sensor, a motion sensor, etc.

The controller 170 may demultiplex the stream signal TS received from the tuner 110, the demodulator 120, or the external device interface 130 into a number of signals, process the demultiplexed signals into audio and video data, and output the audio and video data.

The video signal processed by the controller 170 may be displayed as an image on the display 180. The video signal processed by the controller 170 may also be transmitted to an external output device through the external device interface 130.

The audio signal processed by the controller 170 may be output to the audio output unit 185. Also, the audio signal processed by the controller 170 may be transmitted to the external output device through the external device interface 130.

While not shown in FIG. 1, the controller 170 may include a DEMUX, a video processor, a mixer, a Frame Rate Converter (FRC), a formatter, according to the embodiments. The controller 170 may further include an audio processor and a data processor.

The DEMUX may demultiplex an input stream. For example, the DEMUX may demultiplex an MPEG-2 TS into a video signal, an audio signal, and/or a data signal. The stream signal input to the DEMUX may be received from the tuner 110, the demodulator 120 and/or the external device interface 130.

The video processor may process the demultiplexed video signal. For video signal processing, the video processor may include a video decoder and a scaler.

The video decoder may decode the demultiplexed video signal and the scaler may scale the resolution of the decoded video signal so that the video signal can be displayed on the display 180.

The video decoder may be provided with decoders that operate based on various standards. If the demultiplexed video signal is, for example, an MPEG-2 encoded 2D video signal, the video signal may be decoded by an MPEG-2 decoder.

On the other hand, if the demultiplexed 2D video signal is an H.264-encoded DMB or DVB-handheld (DVB-H) video signal, an MPEC-C part 3 depth video signal, a Multi-view Video Coding (MVC) video signal, or a Free-viewpoint TV (FTV) video signal, the video signal may be decoded by an H.264 decoder, an MPEC-C decoder, an MVC decoder or an FTV decoder, respectively.

The video signal decoded by the video processor may include only a two-dimensional (2D) video signal, may include both a 2D video signal and a three-dimensional (3D) video signal, and/or may include only a 3D video signal.

The video processor may determine whether the demultiplexed video signal is the 2D video signal or the 3D video signal. The determination as to whether the demultiplexed video signal is a 3D video signal may be made based on the broadcast signal received from the tuner 110, an external input signal received from an external device, and/or an external input signal received over a network. In particular, the determination as to whether the demultiplexed video signal is the 3D video signal may be made by referring to a 3D video flag in a header of the stream, 3D video metadata, 3D format information, etc.

The video signal decoded by the video processor may be 3D video signals of various formats. The video signal may be a 3D video signal including a color image and a depth image or a 3D video signal including a multi-view video signal. The multi-view video signal may include a left-eye video signal and a right-eye video signal, for example.

The OSD generator may generate an OSD signal automatically or based on a user input. For example, the OSD generator may generate signals by which a variety of information is displayed as images or text on the display 180 based on the user input. The generated OSD signal may include various data such as user interface screens, a variety of menu screens, widgets, icons, etc. of the image display apparatus 100. The generated OSD signal may include a 2D object or a 3D object.

The mixer may mix the OSD signal generated by the OSD generator and the signal decoded by the video processor. The OSD signal and the decoded signal may include at least one of a 2D signal and a 3D signal, respectively. The mixed signal may be provided to the FRC.

The FRC may change a frame rate of an input image. For example, a frame rate of 60Hz may be converted to a frame rate of 120 or 240Hz. When the frame rate is changed from 60Hz to 120Hz, a first frame is inserted between the first frame and a second frame, or a predicted third frame is inserted between the first and second frames. If the frame rate is to be changed from 60Hz to 240Hz, three identical frames or three predicted frames may be inserted between the first and second frames.

The formatter may receive the signal mixed by the mixer (i.e., the OSD signal and the decoded video signal), and may divide the mixed signal into a 2D video signal and a 3D video signal. The formatter may change the format of the 3D video signal or convert a 2D video signal into a 3D video signal. For example, the formatter may detect an edge or a selectable object from the 2D video signal and separate an object defined by the detected edge or the selectable object into 3D video signals. The generated 3D video signals may be separated into a left-eye video signal L and a right-eye video signal R, as described above.

The audio processor of the controller 170 may process the demultiplexed audio signal. For audio signal processing, the audio processor may include a plurality of decoders.

If the demultiplexed audio signal is a coded audio signal, the audio processor of the controller 170 may decode the audio signal. For example, if the demultiplexed audio signal is an MPEG-2 encoded audio signal, the demultiplexed audio signal may be decoded by an MPEG-2 decoder. If the demultiplexed audio signal is a terrestrial Digital Multimedia Broadcasting (DMB) or MPEG 4 Bit Sliced Arithmetic Coding (BSAC) encoded audio signal, the demultiplexed audio signal may be decoded by an MPEG-4 decoder. If the demultiplexed audio signal is a satellite DMB or DVB-H MPEG-2 Advanced Audio Codec (AAC) encoded audio signal, the demultiplexed audio signal may be decoded by an AAC decoder. If the demultiplexed audio signal is a Dolby AC-3 encoded audio signal, the demultiplexed audio signal may be decoded by an AC-3 decoder.

The audio processor of the controller 170 may also adjust bass, treble and/or volume of the audio signal.

The data processor of the controller 170 may process the demultiplexed data signal. For example, if the demultiplexed data signal is an encoded signal, the demultiplexed data signal may be decoded. The decoded data signal may be an EPG that may include broadcast information specifying start time, end time, etc. of scheduled TV broadcasts for each channel. Examples of an EPG include ATSC-Program and System Information Protocol (PSIP) information in an ATSC scheme and DVB-Service Information (SI) in a DVB scheme. The ATSC-PSIP information or the DVB-SI information may be information included in the above-described stream (i.e., a header (4 bytes) of the MPEG-2 TS).

Depending upon specifications of the controller 170, components of the controller 170 may be combined or omitted. Alternatively, new components may be added to the controller 170.

The controller 170 may control the overall operation of the image display apparatus 100. For example, the controller 170 may control the tuner 110 to tune to an RF signal corresponding to a channel selected by the user or a previously stored channel.

The controller 170 may control the image display apparatus 100 in response to a user command or an internal program input through the user input interface 150.

For example, the controller 170 may control the tuner 110 to receive the signal of the selected channel according to a predetermined channel selection command received through the user input interface 150 and process the video, audio or data signal of the selected channel. The controller 170 may output the channel information selected by the user along with the video or audio signal through the display 180 or the audio output unit 185.

As another example, the controller 170 may output a video or audio signal received from an external device such as a camera or a camcorder through the external device interface 130 to the display 180 or the audio output unit 185 based on an external device video playback command received through the external device interface 150.

The controller 170 may control the display 180 to display images. For example, the controller 170 may control the display 180 to display a broadcast image received from the tuner 110, an external input image received through the external device interface 130, an image received through the network interface 135, an image stored in the memory 140, and/or the like.

The image displayed on the display 180 may be a Two-Dimensional (2D) or Three-Dimensional (3D) still image or moving picture.

The controller 170 may generate and display a 3D object with respect to a predetermined object from among images displayed on the display 180. For example, the object may be at least one of an accessed website (newspaper, magazine, etc.), an EPG, various menus, a widget, an icon, a still image, a moving image, and/or a text file. The content may correspond to one object or a plurality of objects.

The 3D object may be processed to have a depth different from an image displayed on the display 180. For example, the 3D object may be processed to appear to protrude from an image displayed on the display 180.

The controller 170 may recognize a position of the user based on an image captured by a camera unit. For example, a distance (z-axis coordinate) between the user and the image display apparatus 100 may be detected. An x-axis coordinate and a y-axis coordinate in the image display apparatus 100 corresponding to the position of the user may be detected.

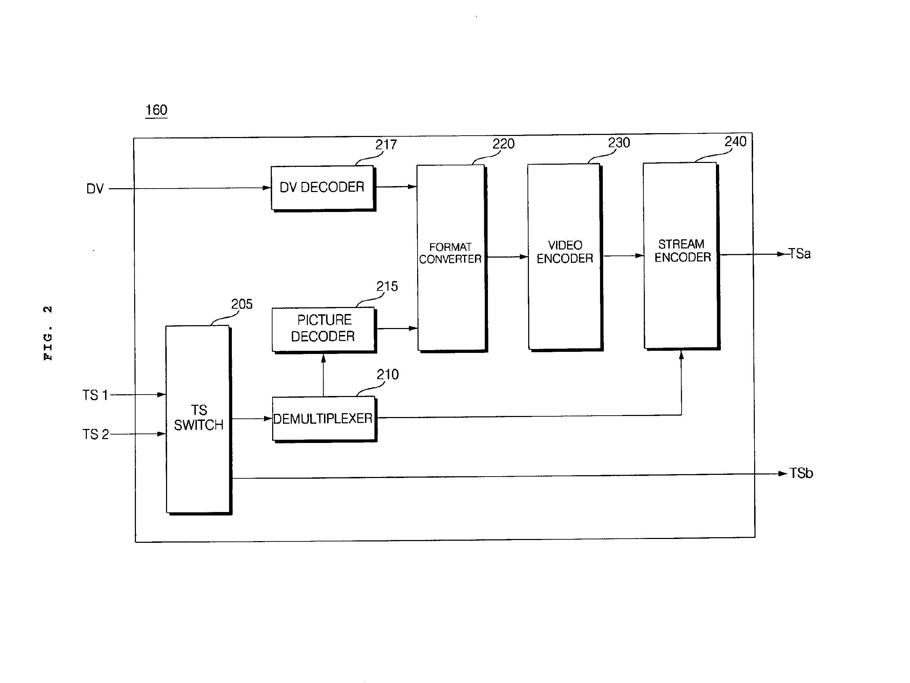

The channel browsing processor 160 for generating a thumbnail image corresponding to a channel signal or an external input signal may be further included. Examples of thumbnails and methods of using the thumbnails are disclosed in U.S. Patent Application 12/651,730, filed January 4, 2010, the subject matter of which is incorporated herein by reference. The channel browsing process may be described in further detail with reference to FIG. 2.

The display 180 may convert the video signal, the data signal, the OSD signal and the control signal processed by the controller 170 or the video signal, the data signal and the control signal received by the external device interface 130, and may generate a driving signal.

The display 180 may be a Plasma Display Panel (PDP), a Liquid Crystal Display (LCD), an Organic Light-Emitting Diode (OLED) display and/or a flexible display. In particular, in an embodiment, the display 180 may be a 3D display.

For viewing a 3D image, the display 180 may be divided into a supplementary display method and a single display method.

In the single display method, a 3D image may be implemented on the display 180 without a separate subsidiary device, for example, glasses. The single display method may include a lenticular method, a parallax barrier, and/or the like, for example.

In the supplementary display method, a 3D image may be implemented on the display 180 using a subsidiary device. The supplementary display method may include various methods such as a Head-Mounted Display (HMD) method or a glasses method. The glasses method may be divided into a passive method such as a polarized glasses method and an active method such as a shutter glasses method. The HMD method may be divided into a passive method and an active method.

If the display 180 is a touch screen, the display 180 may function as not only an output signal but also an input device.

The touch screen may be used to directly input data or commands. The touch screen may transmit a touch signal generated when a person's finger or an object such as stylus pen touches the screen at a position corresponding to a specific object or a position to the controller 170 so as to perform an operation. The touch input may be performed by an object other than the fingertip and the stylus.

The touch screen may be implemented by various methods such as a capacitive method or a contact pressure method, although embodiments are not limited to the touch screen implementation method.

The sensor unit may include a proximity sensor, a touch sensor, a voice sensor, a position sensor, a motion sensor, etc.

The proximity sensor can detect an approaching object without physical contact. The proximity sensor may detect the approaching object using a change in AC magnetic field, a change in static magnetic field, a capacitance change, and/or the like.

The touch sensor may be the touch screen configured on the display 180. The touch sensor may sense the position or intensity of a user touch on the touch screen. The voice sensor may sense user voice or a variety of sounds made by the user. The position sensor may sense the position of the user. The motion sensor may sense a user gesture. The position sensor or the motion sensor may include an infrared sensor or a camera and may sense a distance between the image display apparatus 100 and the user, the motion of the user, the hand movement of the user, the height of the user, the eye level of the user, etc.

The above-described sensors may transmit a result of sensing the voice, touch, position and motion of the user to a sensing signal processor, primarily analyze the sensed result, generate a sensing signal corresponding thereto, and transmit the generated sensing signal to the controller 170.

The sensor unit may include various sensors for sensing a distance between the image display apparatus 100 and the user, the motion of the user, the hand movement of the user, the height of the user, the eye level of the user, etc., in addition to the above-described sensors.

The signal sensed by the sensor unit may be transmitted to the controller 170 through the user input interface 150.

The control unit 170 may sense the user gesture based on the image captured by the camera unit, the signal sensed by the sensor unit, and/or a combination thereof.

The audio output unit 185 may receive the audio signal processed by the controller 170, for example, a stereo signal, a 3.1-channel signal or a 5.1-channel signal, and may output the received audio signal as sound. The audio output unit 185 may take the form of various types of speakers.

The power supply 190 may supply power to the image display apparatus 100. More particularly, the power supply 190 may supply power to the controller 170 which may be implemented as a System On Chip (SOC), the display 180 for displaying the video signal, and/or the audio output unit 185 for outputting the audio signal. In an embodiment, power may be supplied to a heating unit that includes a heating wire.

The remote control device 200 may transmit a user input to the user input interface 150. For transmission of a user input, the remote control device 200 may use various communication techniques such as IR communication, RF communication, Bluetooth, Ultra Wideband (UWB), ZigBee, and/or the like. In addition, the remote control device 200 may receive a video signal, an audio signal or a data signal from the user input interface 150 and may output the received signals visually or audibly.

The above-described image display apparatus 100 may be a fixed digital broadcast receiver capable of receiving at least one of ATSC (8-VSB) broadcast programs, DVB-T (COFDM) broadcast programs, or ISDB-T (BST-OFDM) broadcast programs. The above-described image display apparatus 100 may be a mobile digital broadcast receiver capable of receiving at least one of terrestrial DMB broadcast programs, satellite DMB broadcast programs, ATSC-M/H broadcast programs, or media forward only broadcast programs. The image display apparatus 100 may be a cable, satellite communication or IPTV digital broadcast receiver.

The image display apparatus may include a TV receiver, a mobile phone, a smart phone, a notebook computer, a digital broadcast terminal, a Personal Digital Assistant (PDA), a Portable Multimedia Player (PMP), etc, for example.

The block diagram of the image display apparatus 100 shown in FIG. 1 is only exemplary. Depending upon specifications of the image display apparatus 100 in an actual implementation, components of the image display apparatus 100 may be combined or omitted and/or new components may be added. That is, two or more components may be incorporated into one component or one component may be configured as separate components, as needed. In addition, a function of each block may be described for a purpose of describing the embodiment and thus specific operations or devices should not be construed as limiting the scope and spirit of embodiments.

FIG. 2 is a block diagram showing an internal configuration of the channel browsing processor of FIG. 1. Other embodiments and configurations may also be provided.

As shown in FIG. 2, the channel browsing processor 160 may include a switch 205, a demultiplexer (DEMUX) 210, a picture decoder 215, a DV decoder 217, a format converter 220, a video encoder 230, and/or a stream encoder 240.

The switch 205 may select any one of a plurality of input streams, output the selected stream as a main stream without conversion, and transmit the remaining streams to the DEMUX 210. The main stream may correspond to a main video signal, and the main video signal may fill a majority of the display 180. The sub-streams transmitted to the DEMUX 210 may correspond to sub-video signals, and the sub-video signals may cover a portion of the display 180.

This method may be performed in correspondence with a brief view function of a "video channel list" for displaying a channel list in not a full area, but rather in a portion of the display 180. The brief view function may be performed even when an external input list is displayed on the display 180, in addition to the channel list. The brief view function may be performed even when the channel list and the external input list are displayed on the display 180.

The DEMUX 210 may demultiplex the received stream signal TS into a video signal, an audio signal and a data signal. The audio signal of the demultiplexed signals may be transmitted to the picture decoder 215 and the audio signal and the data signal may be transmitted to the stream encoder 240, to form a new stream.

The picture decoder 215 may decode at least a portion of the demultiplexed video signal. Decoding may be performed by an MPEG-2 decoder, an MPEG-4 decoder or an H.264 decoder. The decoded video signal may be a still image or a moving image. For example, the picture decoder 215 may decode an I-picture video signal of the received video signal or a portion of the received video signal.

The DV decoder 217 may receive a digital signal DV converted by the analog/digital converter 140, and may acquire a digital image.

The format converter 220 may convert a format of the video signal received from the picture decoder 215 or the DV decoder 217. For example, the size (resolution) of the received video signal may be changed. The size of the video signal may be scaled to an appropriate size when the image is displayed on the display 180 in the form of a thumbnail.

The format converter 220 may scale the size of the video signal to another size according to the brief view of the "video channel list" and the full view of the "video channel list". For example, the size of the image displayed in the form of a thumbnail upon a full view of the "video channel list" may be greater than the size of the brief view of the "video channel list". The brief view function and the full view function may be performed even when the external input list is displayed on the display 180, in addition to the channel list. The brief view function and the full view function may be performed even when the channel list and the external input list are displayed on the display 180.

The video encoder 230 may encode the video signal converted by the format converter 220. For example, the image converted by the format converter 220 may be encoded using a JPEG or MPEG-2 scheme. The still image or the moving image encoded by the video encoder 230 may be displayed on the display 180 in the form of a thumbnail.

The stream encoder 240 may encode the image encoded by the video encoder 230 into a stream format. That is, the stream encoder 240 may re-encode the image encoded by the video encoder 230 and the audio signal and the data signal demultiplexed by the DEMUX 210. The re-encoding may be performed by a multiplexing method. The encoded stream format may be an MPEG-2 TS format.

The channel browsing processor 160 may take a screenshot at some specific point in time according to input of a user capture command.

Although the channel browsing processor 160 is disclosed as being provided separately from the controller 170, the channel browsing processor 160 may be included in the controller 170.

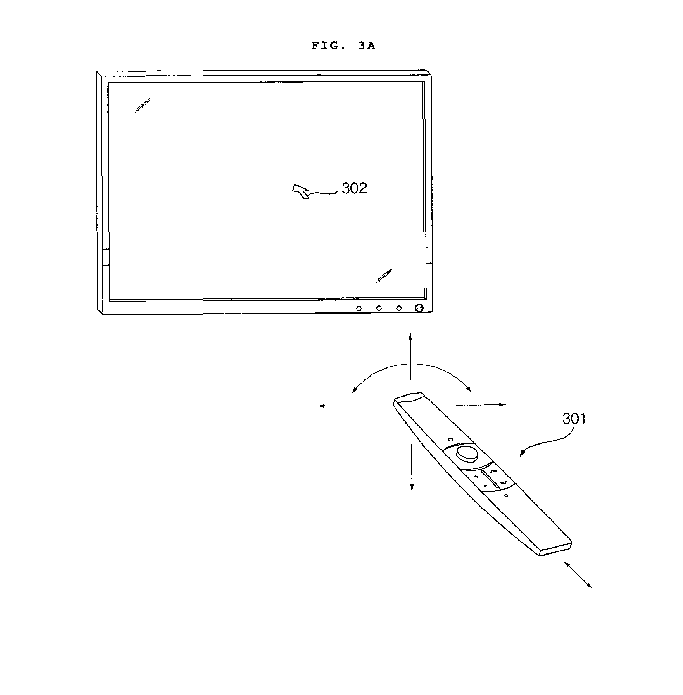

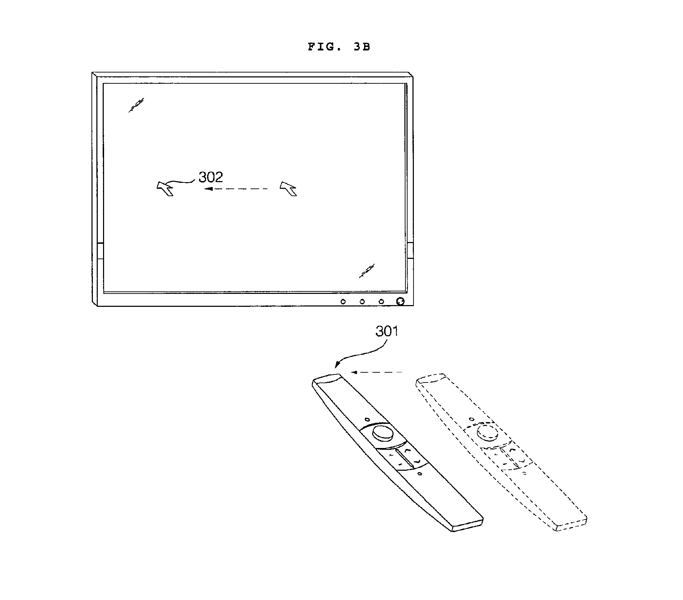

FIGs. 3A and 3B are diagrams to illustrate an example of a remote control device of FIG. 1. Other embodiments and configurations may also be provided.

As shown in FIGs. 3A and 3B, the remote control device 200 of FIG. 1 may be a pointing device 301 (or a motion sensing remote control device).

The pointing device 301 may be a remote control device 200 for inputting a command to the image display apparatus 100. In the present embodiment, the pointing device 301 may transmit or receive a signal to or from the image display apparatus 100 according to an RF communication standard. As shown in FIG. 3A, a pointer 302 corresponding to the pointing device 301 may be displayed on the image display apparatus 100.

The user may move or rotate the pointing device 301 up and down, side to side, and/or back and forth. The pointer 302 displayed on the image display apparatus 100 may correspond to motion of the pointing device 301. FIG. 3B illustrates the motion of the pointer 302 displayed on the image display apparatus 100 in correspondence with the motion of the pointing device 301.

As shown in FIG. 3B, when the user moves the pointing device 301 to the left, the pointer 302 moves to the left on the image display apparatus 100. In the present embodiment, the pointing device 301 may include a sensor for sensing motion. Information about the motion of the pointing device 301 sensed through the sensor of the pointing device 301 may be transmitted to the image display apparatus 100. The image display apparatus 100 may determine movement of the pointing device 301 based on the information about the motion of the pointing device 301, and may calculate coordinates of the pointer 302 corresponding thereto.

FIGs. 3A and 3B show an example in which the pointer 302 displayed on the display 180 moves in correspondence with movement or rotation of the pointing device 301 up and down or side to side. The movement speed or the movement direction of the pointer 302 may correspond to the movement speed or the movement direction of the pointing device 301.

In the present embodiment, the pointer 302 displayed on the image display apparatus 100 may be set to move in correspondence to the movement of the pointing device 301. As another example, a predetermined command may be set to be input to the image display apparatus 100 in correspondence with the movement of the pointing device 301. That is, when the pointing device 301 moves back and forth, a size of the image displayed on the image display apparatus 100 may be increased or decreased. The embodiment is not construed as limiting the scope of other embodiments.

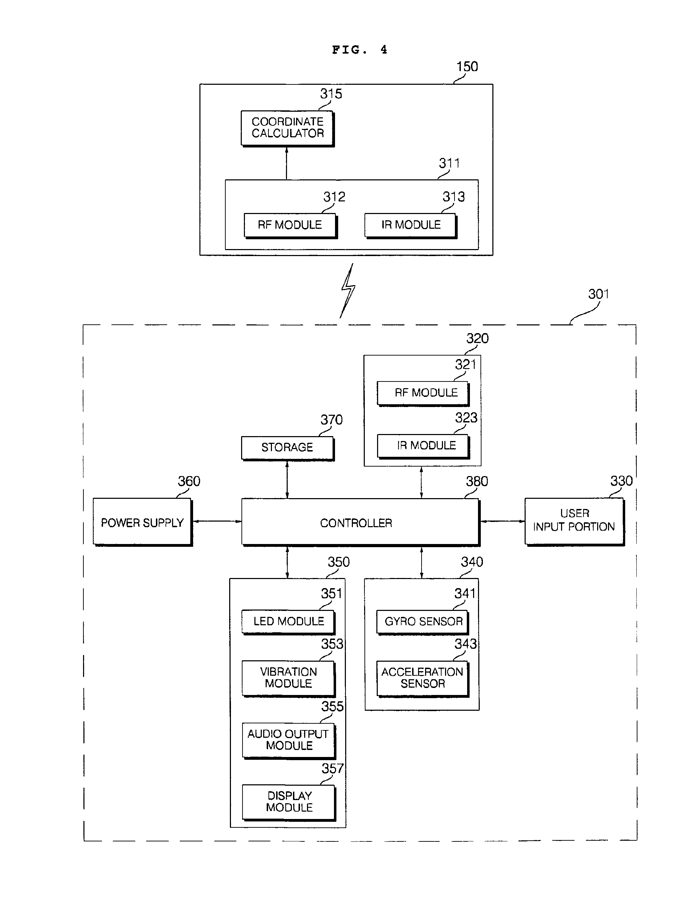

FIG. 4 is a block diagram showing a configuration of the user input interface 150 (of FIG. 1) and the pointing device 301 (of FIG. 3). Other embodiments and configurations may also be provided.

Referring to FIG. 4, the pointing device 301 may include a wireless communication unit 320, a user input unit 330, a sensor unit 340, an output unit 350, a power supply 360, a memory 370, and/or a controller 380.

The wireless communication unit 320 may transmit signals or receive signals to or from the image display apparatuses 100. The pointing device 301 may include an RF module 321 for transmitting or receiving RF signals to or from the user input interface 150 of the image display apparatus 100 according to an RF communication standard. The pointing device 301 may also include an infrared (IR) module 323 for transmitting or receiving IR signals to or from the user input interface 150 of the image display apparatus 100 according to an IR communication standard.

The pointing device 301 may transmit motion information representing the movement of the pointing device 301 to the image display apparatus 100 through the RF module 321. The pointing device 301 may also receive signals from the image display apparatus 100 through the RF module 321. As needed, the pointing device 301 may transmit commands such as a power on/off command, a channel switch command, and/or a volume change command to the image display apparatus 100 through the IR module 323.

The user input unit 330 may include a keypad or a plurality of buttons. The user may enter commands to the image display apparatus 100 by manipulating the user input unit 330 of the pointing device 301. If the user input unit 330 includes a plurality of hard buttons, the user may input various commands to the image display apparatus 100 by pressing the hard buttons using the pointing device 301. Alternatively or additionally, when the user input unit 330 includes a touch screen including a plurality of soft keys, the user may input various commands to the image display apparatus 100 by touching the soft keys using the pointing device 301. The user input unit 330 may also include various input tools other than those set forth herein, such as a scroll key and/or a jog wheel, which should not be construed as limiting embodiments.

The sensor unit 340 may include a gyro sensor 341 and/or an acceleration sensor 343. The gyro sensor 341 may sense movement of the pointing device 301 (e.g. in X-, Y-, and Z-axis directions), and the acceleration sensor 343 may measure the speed of the pointing device 301. The output unit 350 may output a video and/or audio signal corresponding to manipulation of the user input unit 330 or corresponding to a signal received from the image display apparatus 100. The user may easily identify whether the user input unit 330 has been manipulated or whether the image display apparatus 100 has been controlled through the output unit 350.

For example, the output unit 350 may include a Light Emitting Diode (LED) module 351, which may be turned on or off whenever the user input unit 330 is manipulated or whenever a signal is received from or transmitted to the image display apparatus 100 through the wireless communication unit 320. The output unit 350 may also include a vibration module 353 that generates vibrations, an audio output module 355 that outputs audio data, and/or a display module 357 that outputs video data.

The power supply 360 may supply power to the pointing device 301. When the pointing device 301 is kept stationary for a predetermined time or longer, the power supply 360 may shut off supply of power to the pointing device 301 in order to conserve power, for example. The power supply 360 may resume power supply when a predetermined key on the pointing device 301 is manipulated.

The memory 370 may store various types of programs and application data necessary to control or drive the pointing device 301. The pointing device 301 may wirelessly transmit signals to and/or receive signals from the image display apparatus 100 over a predetermined frequency band with the aid of the RF module 321. The controller 380 of the pointing device 301 may store information regarding a frequency band used by the pointing device 301 to wirelessly transmit signals to and/or wirelessly receive signals from the image display apparatus 100 in the memory 370, for later use.

The controller 380 may provide overall control to the pointing device 301. The controller 380 may transmit a signal corresponding to a key manipulation detected from the user input unit 330 or a signal corresponding to the motion of the pointing device 301, as sensed by the sensor unit 340, to the user input interface 150 of the image display apparatus 100.

The user input interface 150 of the image display apparatus 100 may include a wireless communication unit 311 for wirelessly transmitting or receiving a signal to or from the pointing device 301 and a coordinate calculator 315 for calculating the coordinates of the pointer 302 corresponding to the motion of the pointing device 301.

The wireless communication unit 311 may wirelessly transmit to, or receive a signal from, the pointing device 301 through the RF module 312. The pointing device 301 may receive a signal transmitted according to the IR communication standard through the IR module 313.

The coordinate calculator 315 may compensate for hand shakiness or correct errors in the signal corresponding to the motion of the pointing device 301 received through the wireless communication unit 311 (e.g. image stabilization or "anti-shake" function). The coordinate calculator 315 may calculate the coordinates (x, y) of the pointer to be displayed on the display 180.

The signal transmitted from the pointing device 301 to the image display apparatus 100 through the user input interface 150 may be transmitted to the controller 170 of the image display apparatus 100. The controller 170 may determine the information regarding the motion and the key manipulation of the pointing device 301 from the signal transmitted from the pointing device 301 and control the image display apparatus 100 in correspondence thereto.

A method for operating an image display apparatus according to an embodiment may include displaying content on a display, changing a size of a region in which the content is displayed, and displaying, on a display a menu in a region other than the region in which the content is displayed.

A method for operating an image display apparatus according to an embodiment may include displaying content on a display, scaling the content down and displaying the content in a first region of the display, and displaying a menu in a second region of the display.

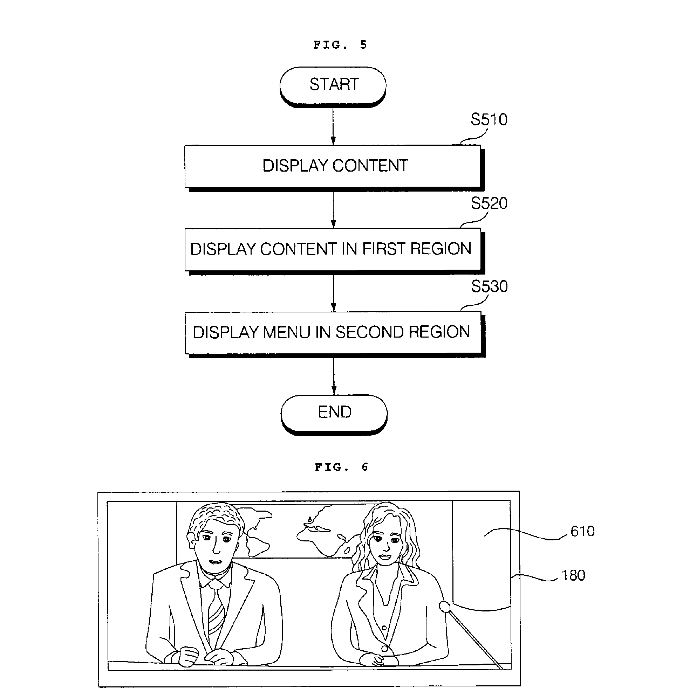

FIG. 5 is a flowchart of a method for operating an image display apparatus according to an embodiment. FIGs. 6 to 14 are display screens of an image display apparatus to illustrate a method for operating an image display apparatus according to an embodiment. Other embodiments and configurations may also be provided.

In a method for operating an image display apparatus according to an embodiment, content may be displayed in at least a portion of the display 180 (S510). As shown in FIG. 6, content 610 may be displayed in a full region of the display 180.

Thereafter, when a predetermined user command such as a menu view command is received or reservation setting or an event associated with specific content and operation occurs, the content may be scaled down and displayed in a first region of the display (S520). A menu may then be displayed in a second region of the display (S530). That is, a size of the first region in which the content is displayed may change and a menu may be displayed in a second region other than the first region in which the content is displayed. The second region may be considered a sidebar or a sidebar region.

The first region of the display 180 may be used as a live broadcast region or a live content region. For example, while broadcast content is continuously displayed, the second region of the display 180 may be used as a functional or menu region so as to display the menu or to perform various functions of the image display apparatus. The second region may be used as an input window.

Accordingly, the user may display a desired menu or perform a desired function using the second region while viewing a broadcast program or content in the first region.

An event associated with the specific content or operation may be variously set to a video call request event from a calling party over a network, an event in which the remote control device is pointed at a predetermined region of the image display apparatus (e.g. pointing device 301), an event in which preferred content is sensed by the channel browsing processor, and/or another appropriate type of event. The type of event that may cause the change in display may be set based on a preference of the user or by default.

Further, the event may be generated when the display area of the content or the sidebar are manually resized, for example, using a motion controlled pointing device 301 (or motion controlled remote control device) or a touchscreen input at the display. For example, a display area for the content 610 may be resized based on a movement of the content 610 and a display of a menu in the menu display area.

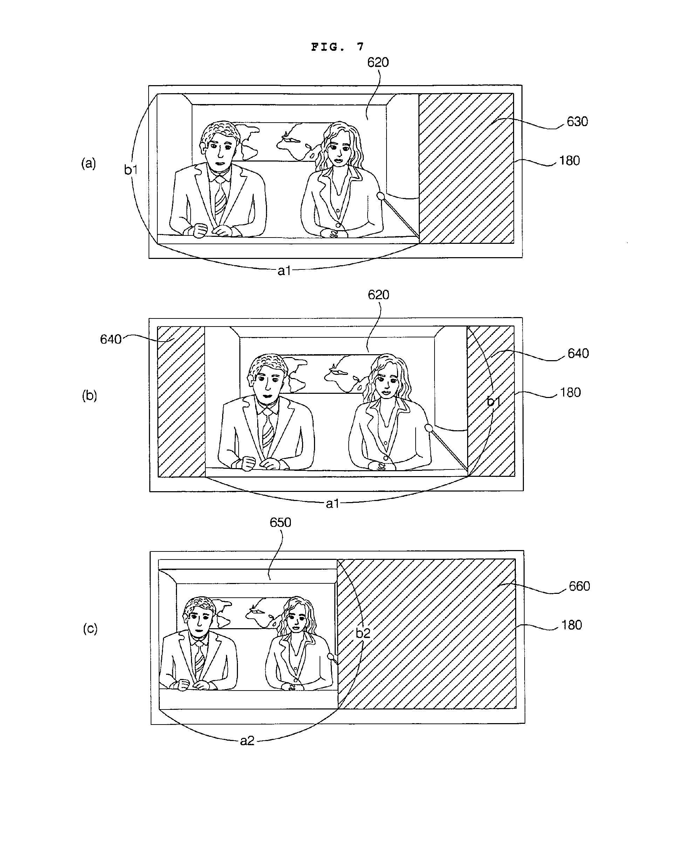

FIG. 7 is a view showing examples of an arrangement of a first region and a second region.

The second region may be arranged on a side of the first region in which the content is displayed.

For example, the content displayed on the full screen as shown in FIG. 6 may be scaled down and displayed in the first region 620 having an aspect ratio of a1:b1, as shown in FIG. 7(a). Although the second region 630 is arranged on the right side of the first region 620 in FIG. 7(a), the second region may be arranged on the left side of the first region 620.

The area of the first region may be greater than the area of the second region. That is, the first region 620, which may be a live region, may be set to be greater in size than the second region 630 for displaying the image corresponding to supplementary information or a specific function.

If the image display apparatus has an aspect ratio of 21:9, the aspect ratio of a1:b1 may be 16:9. That is, while an image with an aspect ratio of 16:9 is displayed without distortion in the first region 620, which is the live region, the menu may be displayed or various functions such as video call, image capture or other channel view may be performed in the other region. The aspect ratio of a1:b1 may be differently set, and may be set to 4:3, for example.

In an embodiment, an area of the first region in which the content is displayed may be greater than an area of the second region in which the menu is displayed. That is, the area of the second region may be determined based on an aspect ratio of the content displayed in the first region.

Priority may be given to the original aspect ratio of the currently utilized content. If the displayed content has an aspect ratio of 16:9, the first region may be set based on the aspect ratio of the content and then the other region may be set as the second region.

In an embodiment, the second region may be arranged on any one of the left side and the right side of the first region. For example, as shown in FIG. 7(b), the second region 640 may be displayed on both the left side and the right side of the first region 620. Images corresponding to different functions may be displayed in the second region of the left side and the second region of the right side, respectively. For example, the menu may be displayed on the left side and a thumbnail image of a channel view may be displayed on the right side.

In an embodiment as shown in FIG. 7(c), the aspect ratio of the first region 650 may be set to a2:b2, unlike the example of FIG. 7(a), and the first region 650 and the second region 660 may have a same size.

The size of the second region in which the menu is displayed may vary. For example, the size of the second region may increase or decrease by selecting, dragging and dropping a boundary line of the menu region using the pointer corresponding to a motion of the pointing device 301.

Likewise, a size and a position of the display area for content may also be moved or resized manually by a drag and drop operation. In this example, the aspect ratio of the content may be maintained as the content is resized or moved. Once the content is moved, the controller 180 may display the menu in a region vacated by the moved content. The controller 180 may automatically adjust a size of the menu display area (or second region) to correspond to the available display area adjacent to the content.

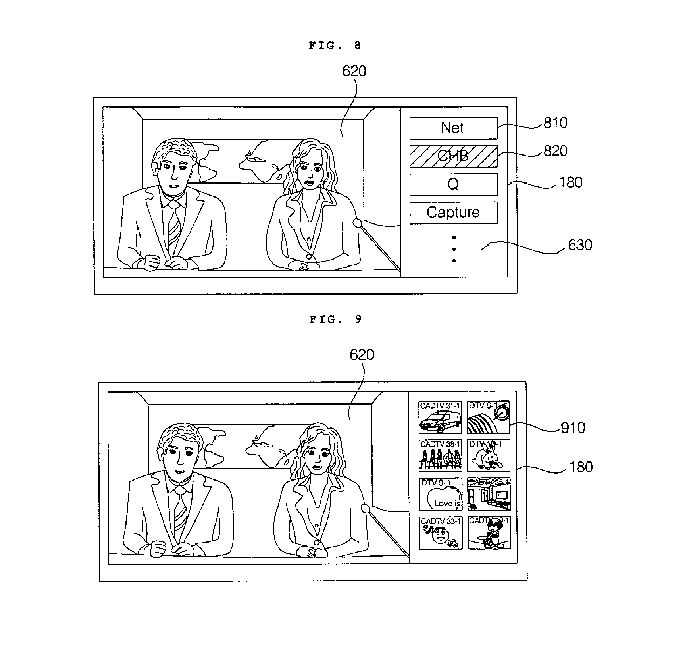

The menu displayed in the second region 630 may include one or more objects 810 and 820 corresponding to various items, as shown in FIG. 8. The items displayed in the menu may be content received from a content provider or stored in the memory 140 including icons/thumbnails or control functions, for example. For example, the menu may include at least one object that corresponds to an aspect ratio change, a content provider list, a video call, an image capture, Internet access, a channel view, and/or other appropriate types of control function or links to contents.

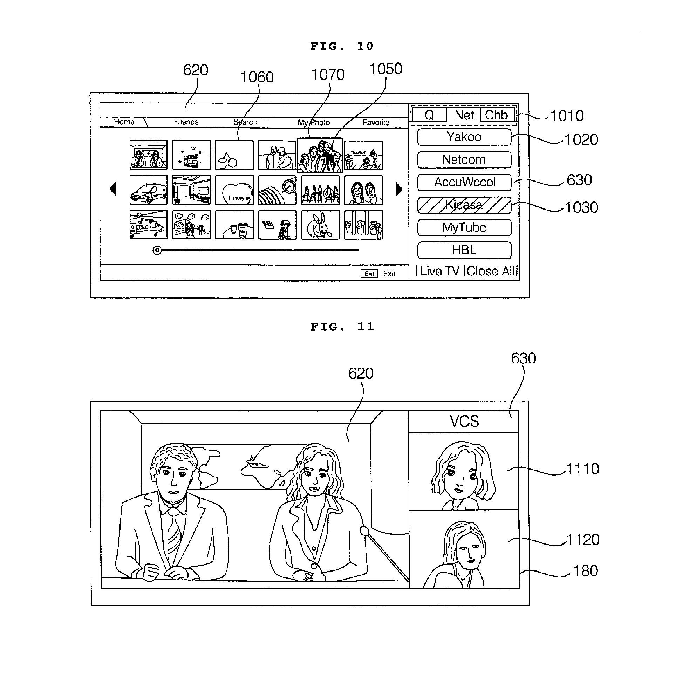

The objects may be icons or widgets, or the objects may be a list. The menu may be arranged in the form of a tab, as shown in FIG. 10.

Thereafter, when an input signal corresponding to at least one of the objects of the menu is received, an image of content corresponding thereto may be displayed in the first region or the second region. The image displayed in the first region or the second region may be replaced with the image corresponding to the object, and the image corresponding to the object may be scaled down and displayed in a portion of the display.

FIG. 9 shows an embodiment in which thumbnail images 910 of other channels may be displayed in the second region when a channel view (object 820) is selected from the menu in FIG. 8 to initiate the channel browsing function. The thumbnail images 910 may display video images corresponding to the programs that may be airing on the respective broadcast channels. The thumbnail images 910 may also include still or moving images that correspond to streaming video available over a network.

FIG. 10 shows an example in which submenus may be displayed in the second region 630 so as to enable selection and access to one of a plurality of Content Providers (CPs) when a CP view is selected from the menu. The objects included in the menu may be arranged in the form of a tab 1010, as shown in FIG. 10. For example, a list of CPs may be displayed as submenu items when the "Net" tab is selected from among the tabs in the menu.

A submenu screen may include objects 1020 and 1030 corresponding to the plurality of CPs, and a number, a size, a position and an arrangement method of objects displayed on one screen may be changed according to the embodiments. The objects 1020 and 1030 may include names of the CPs as well as still images and moving images (e.g. icons or thumbnails) representing the CPs. The objects 1020 and 1030 may be updated by a network operator or the CP, or may be downloaded by the image display apparatus through direct access to the server of the CP.

The objects 1020 and 1030 may correspond to the respective CPs. The user may select one of the objects 1020 and 1030 so as to access the server of the selected CP, thereby receiving a desired service.

When the object corresponding to the CP is selected, the user may use the remote control device 200, such as the pointing device 301.

If the CP associated with a photo is selected as shown in FIG. 10, a service provided by the CP may be displayed in the first region 620. A plurality of photos 1060 and 1070 may be displayed in the first region 620, and the photo 1070 selected by moving the pointer 1050 using the pointing device 301 by the user, may be enlarged and displayed.

If a video call is initiated, as shown in FIG. 11, video call images 1110 and 1120 may be displayed in the second region 630.

The video call may be initiated when a calling party sends a video call request or when the user indicates a video call menu through a selection of an icon in a menu. That is, the video call region may also display a video call menu as well as status information related to a video call. For example, an image representing that a user has selected the video call menu and has initiated an outgoing video call or an image indicating an incoming video call may be displayed. Moreover, a prompt to accept or decline the video call, in addition to the user image or the calling/called party image may be displayed in the region.

The video call image may include at least one of a calling user image 1110 and a called party image 1120. In a one-to-one video call, the user of the image display apparatus and the calling/called party may engage in video conversation or a video conference while transmitting or receiving video and audio data to or from each other.

The video call function supported by the image display apparatus 100 may include not only a one-to-one conversation and a conference call, but also a video conference system that may transmit the video data and the audio data of participants located in different regions so as to perform a conference call over a network. The video conference system may refer to a service for enabling multiple persons at different locations to exchange a variety of information, such as video data and audio data over a network.

Accordingly, the calling/called party image 1120 may be a plurality of images received from the image display apparatuses of a plurality of video call participants.

In disadvantageous arrangements, the video call image may be displayed on a Picture-In-Picture (PIP) screen so as to overlap a main image that is being viewed, or the main image may be scaled down and the video call image may be displayed in a region other than the region in which the main image is displayed. In this example, however, since the main image is partially hidden or is scaled down, it may be difficult to smoothly perform a video call while viewing the content. In contrast, in an embodiment, since the video call image is displayed in the second region 630, viewing of the displayed image is not disturbed and the video call may be efficiently performed.

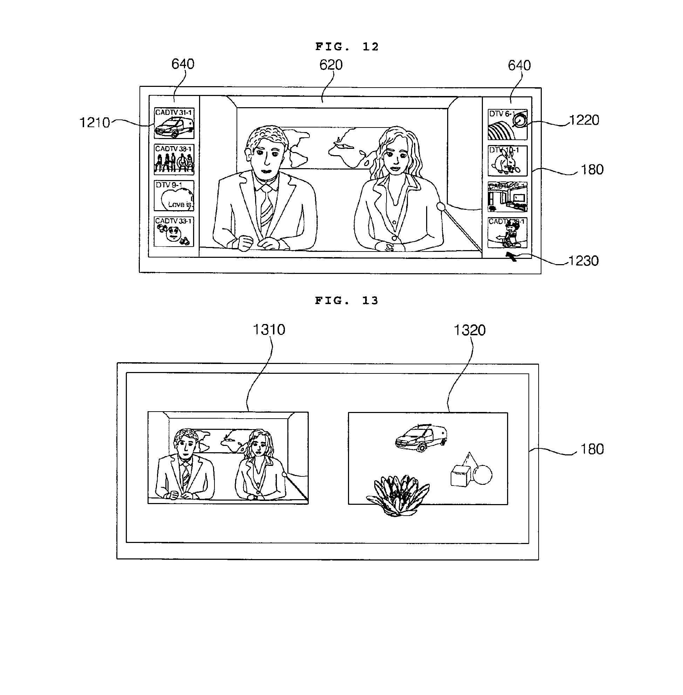

FIG. 12 shows a channel view example that is different from FIG. 9. The second regions 640 may be arranged on both the left side and the right side of the first region 620, and the second regions 640 may display thumbnail images 1210 and 1220.

The left thumbnail image 1210 may be a thumbnail image of a previous channel and the right thumbnail image 1220 may be a thumbnail image of a next channel.

When the user moves a pointer 1230 using the pointing device 301 and selects a channel to be viewed, the main image of the first region 620 may be changed to an image corresponding to the selected channel.

The input signal may be one of a touch signal, a gesture signal and/or a pointing signal.

The display 180 may be a touch screen, and the input signal may be a touch signal input through the touch screen. The touch signal may be input using a variety of input devices such as a stylus and/or a user's finger. The touch input may include an operation for touching and dragging a certain point to another point.

The input signal may be a gesture input signal. The image display apparatus may receive a gesture input signal of a user and display an object corresponding to the received gesture on a screen.

The controller 170 may identify the gesture input signal such as hand movement of the user through a motion sensor. The motion sensor may include a camera for sensing a user's hand and capturing the hand movement of the user. The controller 170 may determine whether or not the hand movement of the user corresponds to predetermined hand movement. When the hand movement of the user corresponds to the predetermined hand movement, the controller 170 may control the image display apparatus 100 based on a command corresponding to the predetermined hand movement.

The input signal may be a pointing signal received from the remote control device 200. The pointing signal may be received through the interface 150. The pointing device 301 may be used as the remote control device.

At least one of the images displayed in the first region and the second region may be a 3D image. For example, as shown in FIG. 13, an image 1310 displayed in the first region may be a 2D image, and an image 1320 displayed in the second region may be a 3D image.

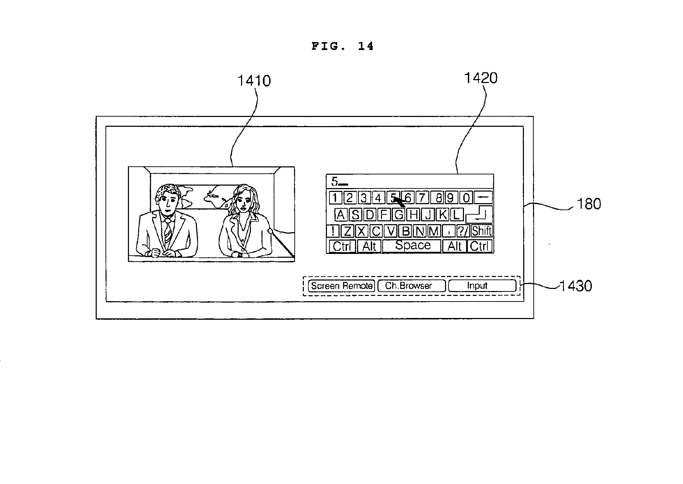

FIG. 14 shows an example of screen arrangement. As shown in FIG. 14, a first region 1410 and a second region 1420 may be equally arranged. The user may perform a variety of inputs through a screen keyboard or a keypad displayed in the second region 1420 or a selection of one of menu objects 1430 so as to perform another function, while viewing content 1410 that is displayed in the first region 1410.

An optimized screen arrangement and screen change may be implemented according to an aspect ratio and characteristics of the content or the preference of the user, to increase usability through convenient content use, and to provide a pleasing experience to the user.

An image display apparatus and a method for operating the same may not be limited to configurations and methods of the above-described embodiments, and some or all of the embodiments may be selectively combined such that embodiments may be variously modified.

A method for operating the image display apparatus may be implemented as code that can be written on a processor-readable recording medium and can thus be read by a processor included in the image display apparatus. The processor-readable recording medium may be any type of recording device in which data is stored in a processor-readable manner. Examples of the processor-readable recording medium include a ROM, a RAM, a CD-ROM, a magnetic tape, a floppy disc, an optical data storage, and a carrier wave (e.g., data transmission through the Internet). The processor-readable recording medium can be distributed over a plurality of computer systems connected to a network so that computer-readable code is written thereto and executed therefrom in a decentralized manner.

Embodiments may be made in view of problems, and it may be an object to provide a method for operating an image display apparatus that is capable of increasing user convenience by performing screen arrangement and screen change optimized for utilization of content.

A method may be provided for operating an image display apparatus. The method may include: displaying content on a display; changing the size of a region in which the content is displayed; and displaying a menu in a region other than the region, in which the content is displayed, of the display.

A method for operating an image display apparatus may include: displaying content on a display; scaling down the content and displaying the content in a first region of the display; and displaying a menu in a second region of the display.

An optimized screen arrangement and screen change may be implemented according to aspect ratio and characteristics of the content or the preference of the user, to increase usability through convenient content use, and to provide a pleasing experience to the user.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method for operating an image display apparatus, the method comprising:
displaying content in a predetermined region of a display of the image display apparatus;
changing a size of the displayed content from the predetermined region to a first region in which the content is displayed; and
displaying a menu in a second region of the display at a side of the first region while the content is displayed in the first region, wherein an area of the first region in which the content is displayed with the changed size is greater than an area of the second region in which the menu is displayed.

2. The method according to claim 1,
wherein the area of the second region is determined based on an aspect ratio of the area of the first region.

3. The method according to claim 1,
wherein the displayed menu includes at least one object that corresponds to an aspect ratio change, a content provider list, a video call, image capture, Internet access, or channel view.

4. The method according to claim 3,
further comprising:
in response to receiving a selection of the at least one object of the menu, displaying an image corresponding to the object on the display.

5. The method according to claim 4,
wherein the selection is one of a touch input, a gesture input, or an input received from a pointing device.

6. The method according to claim 5,
wherein the pointing device is a motion sensing remote control device that controls movement of a pointer displayed on the display based on movement of the motion sensing remote control device.

7. The method according to claim 1,
further comprising changing a size of the second region in which the menu is displayed.

8. The method according to claim 1,
wherein at least one of the content or the menu is a three-dimensional (3D) image.

9. The method according to claim 1,
wherein changing the size from the predetermined region to the first region occurs in response to the image display device receiving a signal from a user.

10. The method according to claim 1,
wherein an aspect ratio of the display is 21:9 and the aspect ratio of the first region is 16:9 or 4:3.

11. An image display apparatus comprising:
a receiver for receiving content from at least one of a broadcast signal, a network, an external device, or a storage device;
a display having a display region of a prescribed width; and
a controller configured to control the display to display the content on a prescribed area of the display, the prescribed area having a smaller width than the prescribed width of the display, and configured to change a size of the displayed content from the prescribed area to a first region on the display in response to a prescribed event,
wherein a menu is displayed in a second region adjacent to the first region, and an area of the first region is greater than an area of the second region.

12. The image display apparatus according to claim 11,
wherein the area of the second region in which the menu is displayed is determined based on an aspect ratio of the area of the first region.

13. The image display apparatus according to claim 11,
wherein the displayed menu includes at least one object that corresponds to an aspect ratio change, a content provider list, a video call, image capture, Internet access, or channel view, and
wherein in response to receiving a selection of the at least one object of the menu, an image corresponding to the object is displayed on the display.

14. The image display apparatus according to claim 13,
wherein the selection is one of a touch input, a gesture input, or an input received from a pointing device.

15. The image display apparatus according to claim 14,
wherein the pointing device is a motion sensing remote control device that controls movement of a pointer displayed on the display based on movement of the motion sensing remote control device.
